# FASCICULE DE BREVET EUROPEEN

(11) **EP 3 581 363 B1**
(45) Date de publication et mention de la délivrance du brevet: **07.06.2023**
(21) Numéro de dépôt: 19179964.2
(22) Date de dépôt: 13.06.2019
(51) Int. Cl.: B29C 53/36

(54) **ÉBAUCHE PLANE ET OBJET TRIDIMENSIONNEL RÉALISÉ À PARTIR DE L'ÉBAUCHE**
FLACHER ROHLING UND AUS DIESEM ROHLING HERGESTELLTES 3D-OBJEKT
PLANAR SKETCH AND THREE-DIMENSIONAL OBJECT MADE FROM THE SKETCH

(30) Priorité: 14.06.2018 FR 1870697
(43) Date de publication de la demande: 18.12.2019
(73) Titulaire: Piatoni, 20090 Ajaccio (FR)
(72) Inventeur: Alfonsi, Jean-Luc, 20000 Ajaccio (FR)
(74) Mandataire: Germain Maureau

(56) Documents cités:
- WO-A2-03/011582
- CH-A- 266 907

## Description

La présente invention concerne le domaine des objets formés à partir d'une ou plusieurs pièces issues de la découpe d'un patron réalisé sur un panneau de matériau préférentiellement de faible épaisseur.

Généralement, les pièces planes formant un objet tridimensionnel de par leur assemblage sont classiquement découpées dans un ou plusieurs panneaux de matériau de faible épaisseur par en exemple en bois ou en plastique et préférentiellement, en poly-méthacrylate de méthyle (PMMA) ou polypropylène (PP). Par exemple, les pièces peuvent être découpées par laser, scie à chantourner, scie, fraiseuse, défonceuse, etc. L'assemblage de ces pièces est réalisé par emboîtement, tenon mortaise, etc... On obtient des objets dont les lignes sont dictées par la rigidité du panneau duquel sont issues les pièces assemblées et par la technique d'assemblage desdites pièces. Cette technique n'est donc pas toujours avantageuse lors de la création d'objets aux formes organiques requérant de la souplesse et de la rondeur.

Il existe une technique de formage appelée « living hinge » en anglais qui permet de fragiliser un panneau rigide pour lui permettre de se plier, du fait de la formation dans ce panneau de fentes rapprochées. Cette technique est cependant limitée, en particulier du fait que les formes géométriques qu'il est ainsi possible d'obtenir se résument au cylindre ou au cône. Le document WO 03/011582 A2 divulgue une ébauche réalisée sur un panneau de matériau, ladite ébauche plane comprenant au moins: un premier bord transversal, un deuxième bord transversal, opposé au premier bord, au moins une zone de déformation destinée à être déformée pour former un premier volume v1, l'ébauche comprend en outre des pattes qui sont reliées entre elles au niveau de la zone de déformation, les pattes étant configurées pour, lorsque l'objet tridimensionnel est réalisé, délimiter un volume.

L'invention a pour but de remédier à tout ou partie des inconvénients précités et notamment vise à permettre de créer des pièces complexes pour former des objets tridimensionnels sans avoir recours à de l'assemblage ou à du collage à partir d'une seule ébauche.

À cet effet, l'invention a pour objet une ébauche plane d'objet tridimensionnel, réalisée sur un panneau de matériau, ladite ébauche plane comprenant au moins : un premier bord transversal, un deuxième bord transversal, opposé au premier bord, au moins une zone de déformation destinée à être déformée pour former un premier volume v1, ladite zone de déformation comprenant une première pluralité de découpes borgnes formant des languettes s'étendant du premier bord en direction du deuxième bord sur une distance déterminée d1 strictement inférieure à la longueur totale L de l'ébauche, chaque découpe borgne de la première pluralité s'étendant selon un axe globalement longitudinal de l'ébauche plane. Selon une définition générale de l'invention, l'ébauche comprend en outre une deuxième pluralité de découpes borgnes formant des pattes s'étendant depuis le deuxième bord de l'ébauche plane vers le premier bord sur une distance déterminée d2 strictement inférieure à la longueur totale L de l'ébauche, la distance d3 entre chaque découpe borgne de la deuxième pluralité et le premier bord étant dépourvue de découpe de sorte que les languettes et les pattes sont reliées entre elles au niveau de la zone de déformation. De plus, les pattes sont configurées pour, lorsque l'objet tridimensionnel est réalisé, délimiter un deuxième volume v2 prolongeant le premier volume v1, et s'étendre depuis la zone de déformation tangentiellement au premier volume v1.

Avantageusement, cette ébauche permet la mise en forme d'un objet tridimensionnel de manière simple par déformation de la zone de déformation, ce qui entraîne le positionnement des pattes de manière à créer un deuxième volume v2 adjacent au premier volume v1 réalisé par déformation de la zone de déformation. Les découpes de la première pluralité permettent l'affaiblissement de la zone de déformation autorisant une torsion de l'ébauche pour sa mise en forme. Grâce à l'invention, il est possible de créer un objet tridimensionnel à partir d'une unique ébauche plane et de créer par la mise en forme de l'ébauche un premier volume v1 constituant un corps et un deuxième volume v2 adjacent et prolongeant le premier volume v1, sans avoir recours à un quelconque assemblage ou collage de pièces rapportées.

Selon l'invention on entendra par « découpe borgne », une découpe débouchant sur un bord et séparée du bord opposé par de la matière, ladite découpe borgne étant une découpe traversante et totale dans le sens de l'épaisseur du panneau.

Selon une caractéristique de l'invention, les découpes borgnes de la deuxième pluralité s'étendent globalement dans une zone d'extension.

De façon concrète, sur l'ébauche, dans la zone de déformation, les découpes borgnes de la première pluralité, formant les languettes, et, le cas échéant, la portion des découpes borgnes de la deuxième pluralité qui est située dans cette zone de déformation, créeront des facettes qui formeront le premier volume v1 de l'objet tridimensionnel. Ce premier volume v1 peut être un cylindre, un cône convergeant ou divergent, une vague ou un drapé, etc. La direction de déformation de l'ébauche, par exemple la direction d'enroulement, est globalement parallèle aux bords transversaux.

En outre, sur l'objet tridimensionnel, les pattes s'étendent dans le prolongement de ces facettes mais de façon tangentielle au premier volume v1, de façon à former un deuxième volume v2 qui s'étend longitudinalement en extension, et radialement au-delà du premier volume v1. L'ébauche selon l'invention permet donc de s'écarter du volume que l'on serait capable d'obtenir par simple enroulement de la zone de déformation.

Un tel résultat découle du fait que, dans la zone d'extension de l'ébauche, distincte et adjacente à la zone de déformation, les pattes possèdent une portion qui est en décalage, dans la direction de déformation de l'ébauche, par rapport aux languettes. Par exemple, dans le cas de bords transversaux rectilignes et parallèles, avec des découpes borgnes de la première pluralité sous forme de segments longitudinaux parallèles, le décalage des pattes peut être dans une direction perpendiculaire aux découpes borgnes de la première pluralité. De façon concrète, cela signifie que la direction dans laquelle s'étendent les pattes n'est pas uniquement longitudinale, mais possède également une composante transversale, autrement dit que les pattes ont au moins une portion s'étendant en oblique par rapport à la direction des languettes.

Ce décalage des pattes peut être présent dès la frontière entre la zone de déformation et la zone d'extension. Ou bien, en variante, les pattes peuvent avoir, au niveau de ladite frontière, une portion s'étendant globalement longitudinalement, prolongée par une portion présentant le décalage précité. En pratique, les pattes peuvent être rectilignes mais disposées en oblique par rapport aux languettes ; ou les pattes peuvent avoir une forme courbe.

Il est précisé que l'expression « bord transversal » ne limite pas l'ébauche selon l'invention à une forme rectiligne de ce bord, et que le terme « longitudinal » désigne une direction générale qui n'est pas nécessairement totalement rectiligne.

Ainsi, une fois l'objet tridimensionnel réalisé, le bord transversal de l'ébauche correspond sensiblement à une direction incluse dans un plan transversal de cet objet, et la direction longitudinale correspond sensiblement à une direction générale dans laquelle s'étend l'objet tridimensionnel, par exemple sensiblement orthogonalement audit plan transversal de cet objet.

Le bord transversal peut ainsi être courbe, en étant localement orthogonal à la direction longitudinale. Tel est le cas pour une ébauche permettant de former un volume v1 en forme de cône, où les bords opposés peuvent être des arcs de cercle, localement orthogonaux aux rayons de ce cercle, rayons qui, une fois l'objet tridimensionnel réalisé, seront globalement orientés dans la direction dans laquelle s'étend l'objet, le cas échéant avec une conicité.

En outre, le terme « transversal » n'exclut pas un bord transversal qui ne serait pas totalement droit mais comporterait des crans, en formant par exemple une ligne brisée en dents de scie, une succession d'arches, ou analogue.

Avantageusement, dans la zone d'extension, les pattes formées par les découpes de la deuxième pluralité sont indépendantes les unes des autres. De préférence, chacune des pattes reste dans un plan et ne subit pas de déformation.

Selon une caractéristique de l'invention, chaque découpe de chaque pluralité comprend une extrémité débouchant sur un bord et une extrémité opposée.

Selon une caractéristique de l'invention, chaque découpe de la deuxième pluralité est agencée entre deux découpes de la première pluralité de sorte qu'une portion de chaque découpe de la deuxième pluralité est en regard dans une direction transversale de l'ébauche d'une portion de chaque découpe borgne de la première pluralité.

Ainsi, l'extrémité opposée de chaque découpe de la deuxième pluralité est agencée entre deux découpes de la première pluralité. De même, l'extrémité opposée de chaque découpe de la deuxième pluralité est agencée entre deux découpes de la deuxième pluralité.

Alternativement, l'extrémité opposée de chaque découpe de la première pluralité et l'extrémité opposée de chaque découpe de la deuxième pluralité, sont alignées dans une direction transversale. Cependant les découpes de la première pluralité et de la deuxième pluralité sont décalées dans la direction longitudinale de l'ébauche.

Préférentiellement, chaque extrémité opposée comprend un évidement d'encastrement destiné à coopérer avec un accessoire de montage.

Selon une caractéristique de l'invention, les évidements d'encastrement sont répartis sur des lignes transversales à intervalles réguliers et sont conformés pour coopérer chacun avec un ergot équipant un accessoire de montage.

Selon une caractéristique de l'invention, les découpes de la première pluralité sont rectilignes ou courbes ou avec des portions rectilignes et des portions courbes.

Selon une caractéristique de l'invention, les découpes de la première pluralité peuvent être des fentes, des évidements ou des fentes et des évidements.

Selon une caractéristique de l'invention, la zone de déformation est de forme sensiblement quadrangulaire.

Selon une caractéristique de l'invention, le premier bord et le deuxième bord sont sensiblement parallèles.

Selon une caractéristique de l'invention, les pattes formées par les découpes borgnes de la deuxième pluralité de découpes sont de forme identique.

Selon une caractéristique de l'invention, chaque découpe borgne de la deuxième pluralité présente une forme courbe.

Selon une caractéristique de l'invention, les découpes de la première pluralité peuvent être continues ou discontinues.

Selon une caractéristique de l'invention, les découpes sont réalisées par une découpeuse laser.

Selon une caractéristique de l'invention, la distance d3 est strictement inférieure à la distance déterminée d1 ou la distance d3 est également à la distance déterminée d1 ou la distance d3 est supérieure à la distance déterminée d1.

Selon une caractéristique de l'invention, l'ébauche est réalisée en bois ou mélanges de bois ou de fibres naturelles ou en matériau plastique ou composite tel que du PMMA ou du PP, ou en tôle ou en cuir. Dans le cas d'une ébauche en matériau rigide, la présence de découpes de la première pluralité - voire également de la deuxième pluralité - dans la zone de déformation permet de déformer l'ébauche, notamment par enroulement. Dans le cas d'une ébauche en matériau souple, qui peut être déformée même en l'absence de telles découpes, ces découpes peuvent permettre une déformation plus importante, par exemple un enroulement sur un rayon de courbure plus faible que ce qui serait permis par la seule souplesse du matériau.

Selon une caractéristique de l'invention, l'ébauche comprend en outre un dispositif d'emboitement agencé au niveau de la zone de déformation comprenant une première patte d'emboitement configurée pour s'emboîter dans une première encoche, la première patte d'emboitement étant agencée sur un premier côté de la zone de déformation tandis que la première encoche étant agencée sur le côté opposé de la zone de déformation.

Selon une caractéristique de l'invention, le dispositif d'emboitement comprend en outre une deuxième patte d'emboitement positionnée de manière adjacente à la première encoche, ladite deuxième patte d'emboitement étant configurée pour coopérer avec une deuxième encoche agencée de manière adjacente à la première patte d'emboitement.

Selon un mode de réalisation de l'invention, les encoches sont positionnées entre une patte d'emboitement et une languette de la zone de déformation.

L'invention a également pour objet une ébauche plane de forme globalement circulaire, comprenant : un premier bord, un deuxième bord, le premier bord et le deuxième bord étant concentriques et globalement circulaires ; au moins une zone de déformation destinée à être déformée pour former un premier volume v1, ladite zone de déformation se présentant sous une forme annulaire autour du premier bord, de manière concentrique, la zone de déformation comprenant une première pluralité de découpes borgnes formant des languettes s'étendant du premier bord en direction du deuxième bord sur une distance déterminée d1 strictement inférieure au diamètre D de l'ébauche, chaque découpe borgne de la première pluralité s'étendant selon un axe globalement radial par rapport au centre de l'ébauche ou selon un axe tangentiel par rapport au premier bord de l'ébauche ; l'ébauche comprenant en outre une deuxième pluralité de découpes borgnes formant des pattes s'étendant depuis le deuxième bord de l'ébauche vers le premier bord sur une distance déterminée d2 strictement inférieure au diamètre D de l'ébauche, la distance d3 entre chaque découpe borgne de la deuxième pluralité et le premier bord étant dépourvue de découpe de sorte que les languettes et les pattes sont reliées entre elles au niveau de la zone de déformation.

L'invention a également pour objet un objet tridimensionnel, par exemple un luminaire, réalisé à partir de l'ébauche selon l'invention, ledit objet étant caractérisé en ce qu'en ce qu'il comprend :
- un corps formé par la déformation de la zone de déformation de l'ébauche selon l'invention, le corps délimitant un premier volume v1.
- au moins une extension formée d'une pluralité de pattes délimitant un deuxième volume v2 prolongeant le premier volume v1, la pluralité de pattes s'étendant depuis la zone de déformation tangentiellement audit corps.

Grâce à l'invention, il est possible de simplifier le transport de l'objet tridimensionnel puis que ce dernier peut être transporté sous forme d'ébauche plane et peu encombrante. En outre, la fabrication de ces objets est simple et rapide. En effet, n'ayant qu'à manipuler une seule pièce (l'ébauche) déformable, plutôt qu'une pluralité à assembler, la logistique et l'ensemble de la chaîne de production en est simplifiée. De Par la forme de l'ébauche, il est aisé de monter l'objet tridimensionnel.

Selon une caractéristique de l'invention, les pattes sont indépendantes les unes aux autres et ne sont rattachées au corps qu'au niveau de la zone de déformation.

Selon une caractéristique de l'invention, l'objet peut comprendre une deuxième extension formée également de pattes tangentes au corps et délimitant un troisième volume V3 prolongeant le premier volume v1, la deuxième extension étant positionnée à l'opposé de la première extension par rapport au corps.

Selon une caractéristique de l'invention, les languettes formant le corps sont agencées les unes par rapport aux autres angulairement, telles des facettes, ce qui entraine la torsion des pattes de l'extension délimitant le deuxième volume non par leur face comme pour les languettes mais par leur tranche.

Selon une caractéristique de l'invention, l'objet comprend en outre au moins un accessoire de montage comprenant au moins un ergot saillant configuré pour coopérer avec un évidement d'encastrement ménagé sur la zone de déformation du corps.

Selon une caractéristique de l'invention, le au moins un accessoire comprend une pluralité d'ergots agencés régulièrement sur la périphérie de l'accessoire.

Avantageusement, le au moins un accessoire contribue au maintien de la forme du premier volume v1 et renforce la résistance et la tenue de ce premier volume v1. En effet, l'accessoire est agencé perpendiculairement à la zone de déformation.

Selon un mode de réalisation, l'accessoire de montage comprend au moins un crochet configuré pour s'emboîter dans une échancrure ménagée sur un premier côté de la zone de déformation et dans une échancrure ménagée sur le côté opposé de la zone de déformation, afin d'assurer le maintien de l'ébauche en position déformée dans laquelle elle forme le corps.

Par ailleurs, l'objet tridimensionnel peut comprendre un organe de fixation de la partie extrême des pattes opposée au corps.

L'invention sera mieux comprise, grâce à la description ci-après, qui se rapporte à des modes de réalisation selon la présente invention, donnés à titre d'exemples non limitatifs et expliqués avec référence aux figures schématiques annexées. Les figures schématiques annexées sont listées ci-dessous :
La figure 1 représente une ébauche plane selon l'invention,
La figure 2 représente l'ébauche plane illustrée également en figure 1,
La figure 3 représente un panneau de matériau dans lequel est découpée une ébauche plane selon l'invention ainsi que des accessoires de montage,
La figure 4 représente un premier accessoire de montage de l'ébauche selon l'invention,
La figure 5 représente un deuxième accessoire de montage de l'ébauche selon l'invention,
La figure 6 représente une première étape de montage d'une partie de l'ébauche selon l'invention,
La figure 7 représente une deuxième étape de montage d'une partie de l'ébauche selon l'invention,
La figure 8 représente une troisième étape de montage d'une partie de l'ébauche selon l'invention,
La figure 9 représente une quatrième étape de montage d'une partie de l'ébauche selon l'invention,
La figure 10 représente une vue de dessus de l'objet tridimensionnel créé à partir de l'ébauche selon l'invention,
La figure 11 représente une vue en perspective de l'objet tridimensionnel créé à partir de l'ébauche selon l'invention,
La figure 12 représente une vue en perspective d'un autre objet tridimensionnel obtenu à partir d'une ébauche selon l'invention,
La figure 13 représente une vue en perspective d'un autre objet tridimensionnel obtenu à partir d'une ébauche selon l'invention,
La figure 14 représente une ébauche plane selon l'invention selon une variante de réalisation de l'ébauche illustrée en figure 1,
La figure 15 représente une ébauche plane selon l'invention selon la variante illustrée en figure 14,
La figure 16 représente une ébauche plane selon l'invention selon une première variante de réalisation de l'ébauche illustrée en figure 14.
La figure 17 représente une ébauche plane selon l'invention selon une deuxième variante de réalisation de l'ébauche illustrée en figure 14 ;
La figure 18 représente une ébauche plane selon l'invention selon une variante de réalisation de l'ébauche illustrée en figure 1,
Les figures 19 et 20 illustrent de façon schématique des variantes de déformation de l'ébauche pour former des corps de l'objet ayant des formes différentes ;
Les figures 21 à 23 représentent des étapes de montage d'une ébauche selon l'invention, au moyen d'un autre accessoire de montage,
La figure 24 représente une vue en perspective d'un autre objet tridimensionnel obtenu à partir d'une ébauche selon l'invention,
La figure 25 représente une ébauche plane selon l'invention selon encore une autre variante de réalisation de l'ébauche illustrée en figure 1.

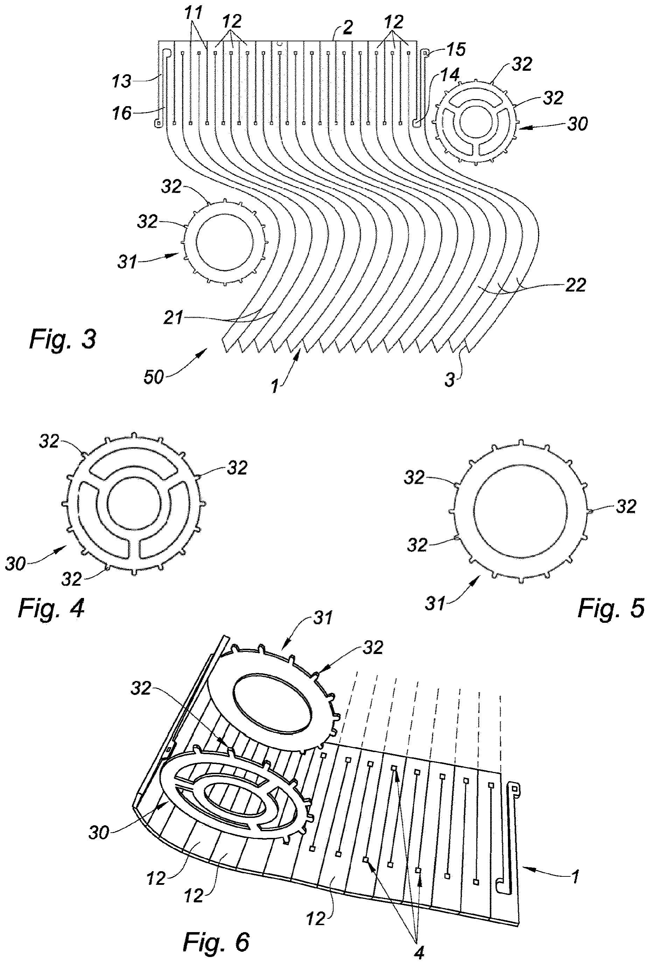

L'invention a pour objet une ébauche 1 plane destinée à être mise en volume afin de créer un objet tridimensionnel 100. L'ébauche 1 est réalisée sur un panneau de matériau 50 comme on peut le voir en figure 3.

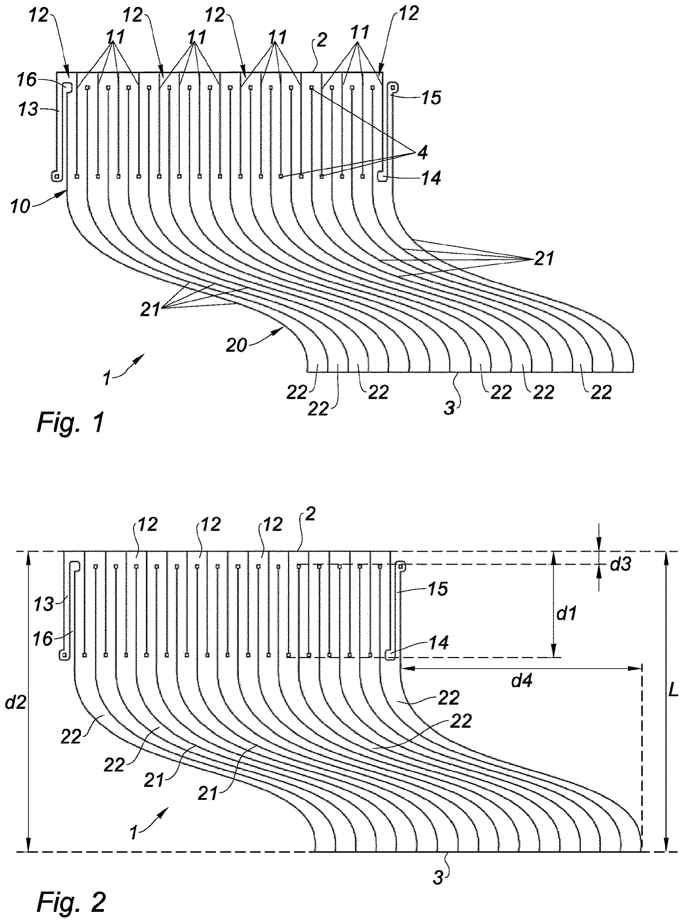

Dans l'exemple illustré notamment aux figures 1 et 2, l'ébauche 1 plane selon l'invention comprend un premier bord transversal 2, un deuxième bord transversal 3, opposé au premier bord 2. L'ébauche 1 comprend en outre une zone de déformation 10 destinée à être déformée pour former un premier volume v1. La zone de déformation 10 peut être déformée par enroulement, pliage, rabattement, cintrage, etc.

Comme on peut le voir aux figures 1 et 2, la zone de déformation 10 comprend une première pluralité de découpes borgnes 11 formant des languettes 12 s'étendant du premier bord 2 en direction du deuxième bord 3 sur une distance déterminée d1 strictement inférieure à la longueur totale L de l'ébauche 1, chaque découpe borgne 11 de la première pluralité s'étendant selon un axe globalement longitudinal de l'ébauche 1.

En outre, l'ébauche 1 comprend une deuxième pluralité de découpes borgnes 21 formant des pattes 22 s'étendant depuis le deuxième bord 3 de l'ébauche 1 plane vers le premier bord 2 sur une distance déterminée d2 strictement inférieure à la longueur totale L de l'ébauche 1. Les découpes borgnes de la deuxième pluralité s'étendent globalement dans une zone d'extension 20. Dans la zone d'extension 20, les pattes 22 formées par les découpes 21 de la deuxième pluralité sont indépendantes les unes des autres.

Comme on peut le voir en figure 2, la distance d3 entre chaque découpe borgne 21 de la deuxième pluralité et le premier bord 2 est strictement inférieure à la distance déterminée d1 et est dépourvue de découpe de sorte que les languettes 12 et les pattes 22 sont reliées entre elles au niveau de la zone de déformation 10.

Comme on le voit sur la figure 2, dans la zone d'extension 20, les pattes 22 possèdent une portion qui est en décalage d'une distance d4, dans la direction de déformation de l'ébauche 1, par rapport aux languettes 12. Cela revient à dire que les pattes 22 sont configurées pour, lorsque l'objet tridimensionnel 100 est réalisé, délimiter un deuxième volume v2 prolongeant le premier volume v1, et s'étendre depuis la zone de déformation 10 tangentiellement au premier volume v1.

Comme référencé en figure 1, chaque découpe de chaque pluralité comprend une extrémité débouchant sur un bord 2, 3 et une extrémité opposée. Préférentiellement, l'extrémité opposée comprend un évidement d'encastrement 4 destiné à coopérer avec un accessoire de montage 30, 31, 33. Les évidements d'encastrement 4 sont répartis sur des lignes transversales à intervalles réguliers et sont conformés pour coopérer chacun avec un ergot 32 équipant l'accessoire de montage 30, 31, 33.

Bien entendu, l'usage d'accessoire de montage n'est pas obligatoire et dans une variante non représentée, les extrémités opposées de chaque découpe peuvent être dépourvues d'évidement d'encastrement.

Comme on peut le voir sur les figures 1, 2 et 3 notamment, l'ébauche 1 comprend en outre un dispositif d'emboitement agencé au niveau de la zone de déformation 10 comprenant une première patte d'emboitement 13 configurée pour s'emboîter dans une première encoche 14, la première patte d'emboitement 13 étant agencée sur un premier côté de la zone de déformation 10 tandis que la première encoche 14 est agencée sur le côté opposé de la zone de déformation 10.

Par ailleurs, le dispositif d'emboitement comprend en outre une deuxième patte d'emboitement 15 positionnée de manière adjacente à la première encoche 14, ladite deuxième patte d'emboitement 15 étant configurée pour coopérer avec une deuxième encoche 16 agencée de manière adjacente à la première patte d'emboitement 13.

Selon l'invention, les encoches 14, 16 sont positionnées entre une patte d'emboitement 13, 15 et une languette 12 de la zone de déformation 10.

Dans les exemples illustrés aux figures 1 à 3, 6 à 13, les découpes 11 de la première pluralité sont rectilignes mais ces dernières peuvent également être courbes ou former des motifs présentant des portions rectilignes et des portions courbes.

Selon un mode de réalisation illustré aux figures 1 et 2, le premier bord 2 et le deuxième bord 3 sont sensiblement parallèles. Dans un autre mode de réalisation illustré en figure 3, le deuxième bord 3 n'étant pas rectiligne mais formé d'une succession de crans, le premier bord 2 et le deuxième bord 3 ne sont pas parallèles. Une extrémité d'un des bords d'un cran peut être formée dans le prolongement d'une découpe 21 de la deuxième pluralité. Dans les exemples illustrés, les pattes 22 présentent une forme courbe.

Les figures 4 et 5 illustrent deux accessoires de montage 30, 31, qui peuvent être découpés de la même manière que l'ébauche 1 dans le même panneau de matériau 50. Ces accessoires peuvent être utilisés notamment pour la réalisation d'un luminaire auquel cas un porte douille est nécessaire pour maintenir une ampoule dans le corps de luminaire. Comme on peut le voir sur ces figures, les accessoires de montage comprennent une pluralité d'ergots 32 agencés régulièrement sur la périphérie de l'accessoire. Ces ergots 32 sont destinés à venir s'encastrer dans les évidements d'encastrement 4 prévus dans la zone de déformation.

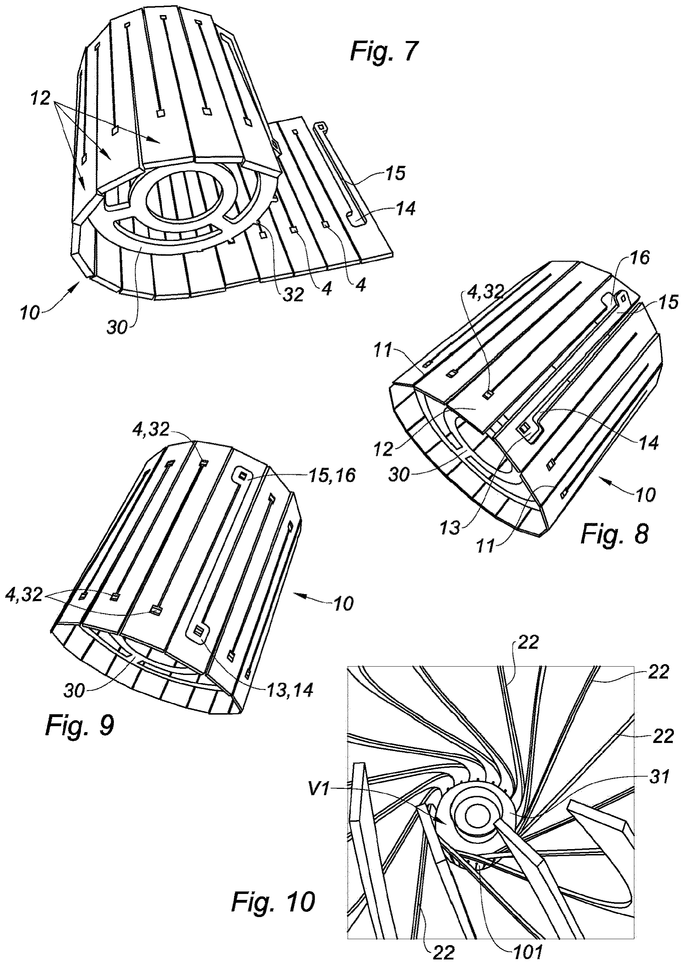

Bien entendu, pour la création d'objet tridimensionnels, il n'est pas obligatoire d'avoir recours à ces accessoires ou à seulement l'un deux. Cependant ces accessoires 30, 31 contribuent au maintien du premier volume v1 et renforcent la résistance et la tenue de ce premier volume v1. En effet, comme on peut le voir aux figures 6 et 7, les accessoires 30, 31 sont montés dans un plan perpendiculaire à l'ébauche 1 et on enroule la zone de déformation 10 autour desdits accessoires 30, 31, les ergots 32 venant se loger dans les évidements d'encastrement 4 lors de l'enroulement.

Aux figures 6 à 9 il n'est représenté que la zone de déformation de l'ébauche pour plus de clarté dans l'exposé de la mise en forme de l'ébauche 1.

Une fois la zone de déformation 10 déformée ou enroulée ou pliée, on emboite la première patte d'emboitement 13 dans la première encoche 14 et la deuxième patte d'emboitement 15 dans la deuxième encoche 16 comme illustré aux figures 8 et 9.

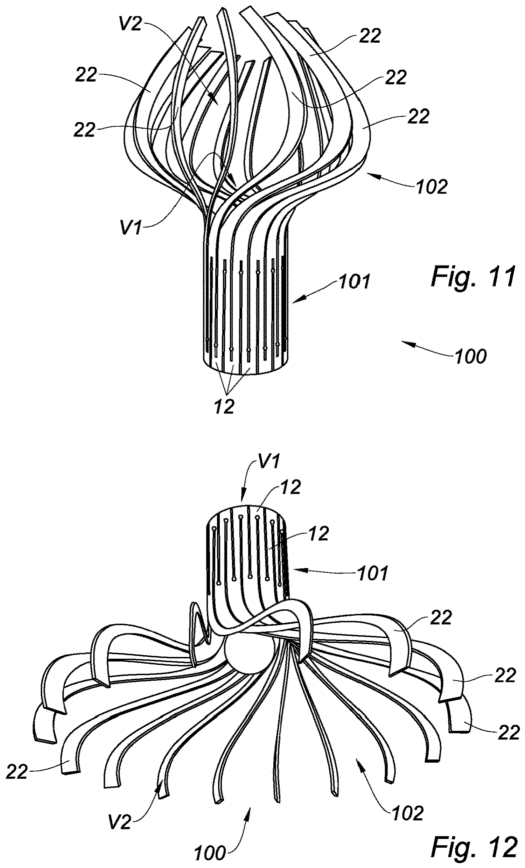

Aux figures 10 à 13, sont illustrés des luminaires qui sont des objets tridimensionnels 100 réalisés à partir d'ébauches selon l'invention. Le luminaire représenté aux figures 10 et 11 est issu de l'ébauche 1 illustrée en figures 1 et 2.

Quel que soit le modèle d'objet tridimensionnel 100, ledit objet comprend :
- un corps 101 formé par la déformation de la zone de déformation de l'ébauche selon l'invention, le corps 101 délimitant un premier volume v1.
- au moins une extension 102 formée d'une pluralité de pattes 22 délimitant un deuxième volume v2 prolongeant le premier volume v1, la pluralité de pattes 22 s'étendant depuis la zone de déformation tangentiellement audit corps 101.

Comme on peut le constater notamment par la figure 10, les pattes 22 sont indépendantes les unes des autres et ne sont rattachées au corps 2 qu'au niveau de la zone de déformation 10.

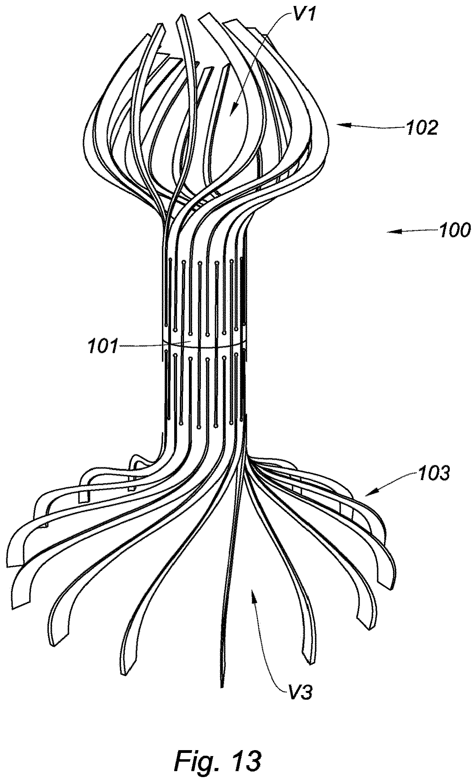

Dans une variante d'objet tridimensionnel 100 illustré en figure 13, l'objet 100 peut comprendre une deuxième extension 103 formée également de pattes tangentes au corps 101 et délimitant un troisième volume V3 prolongeant le premier volume v1. La deuxième extension est positionnée à l'opposé de la première extension 102 par rapport au corps 101.

Selon une caractéristique de l'invention, les languettes formant le corps sont agencées les unes par rapport aux autres angulairement ce qui entraîne la torsion des pattes de l'extension délimitant le deuxième volume non par la leur face comme pour les languettes mais par leur tranche.

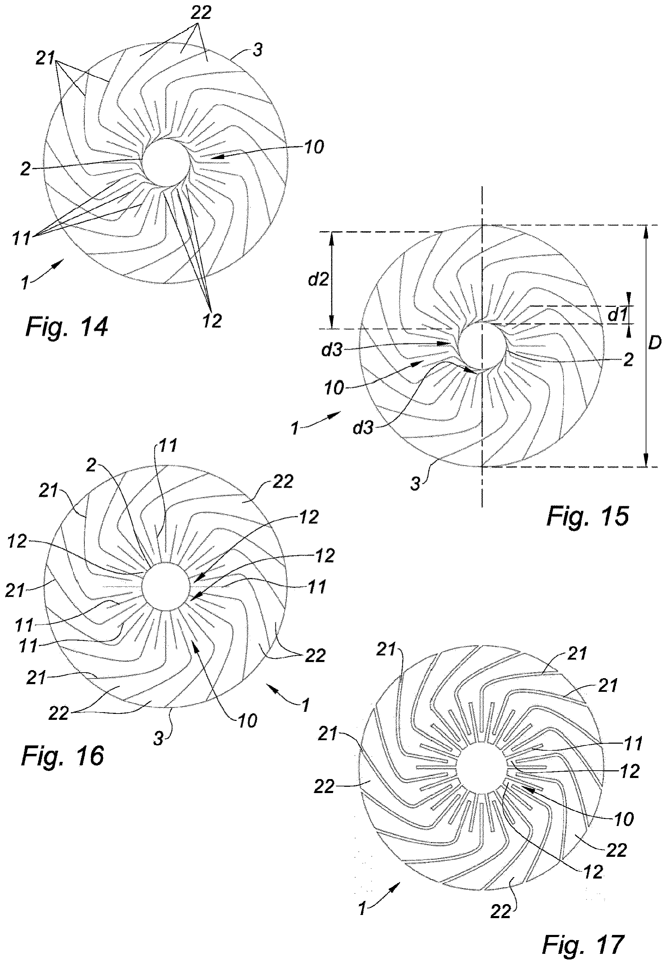

Dans les variantes représentées aux figures 14 à 16, l'ébauche 1 est de forme globalement circulaire. Le premier bord 2 et le deuxième bord 3 sont concentriques et circulaires. La zone de déformation 10 destinée à être déformée pour former un premier volume v1 se présente sous une forme annulaire autour du premier bord 2, de manière concentrique. La zone de déformation 10 comprend une première pluralité de découpes 11 borgnes formant des languettes 12 s'étendant du premier bord 2 en direction du deuxième bord 3 sur une distance déterminée d1 strictement inférieure au diamètre D de l'ébauche (1), chaque découpe 11 borgne de la première pluralité s'étendant selon un axe globalement radial par rapport au centre de l'ébauche 1 ou tangentiel par rapport au premier bord 2 de l'ébauche 1. L'ébauche 1 comprend en outre une deuxième pluralité de découpes 21 borgnes formant des pattes 22 s'étendant depuis le deuxième bord 3 de l'ébauche 1 vers le premier bord 2 sur une distance déterminée d2 strictement inférieure au diamètre D de l'ébauche 1, la distance d3 entre chaque découpe 21 borgne de la deuxième pluralité et le premier bord 2 étant dépourvue de découpe de sorte que les languettes 12 et les pattes 22 sont reliées entre elles au niveau de la zone de déformation 10.

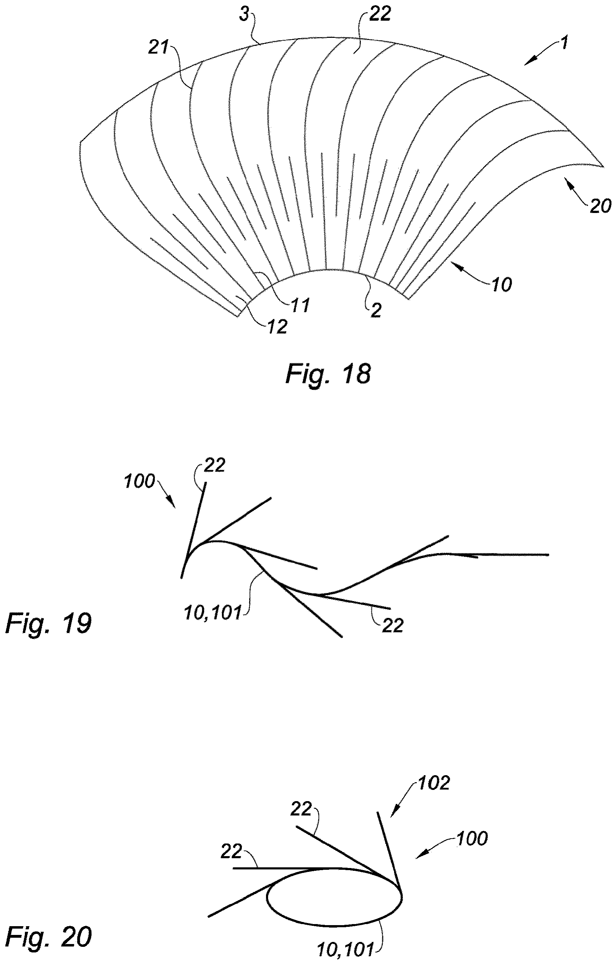

Dans la variante représentée sur la figure 18, l'ébauche lest définie entre des bords 2, 3 opposés en forme d'arc de cercle, et est destinée à la réalisation d'un corps 101 de forme conique.

Sur les figures 19 et 20 sont représentés schématiquement des variantes d'objets tridimensionnels 100 dont le corps 101 n'est pas cylindrique. Sur la figure 19, la zone de déformation 10 a été déformée selon des ondulations, pour former un corps 101 formant un drapé. Les pattes 22, tangentes au corps 101, s'étendent d'un côté ou de l'autre du corps 101. Sur la figure 20, la zone de déformation 10 a été enroulée pour former un tube aplati, de section ovale. D'autres réalisations non représentées peuvent être envisagées.

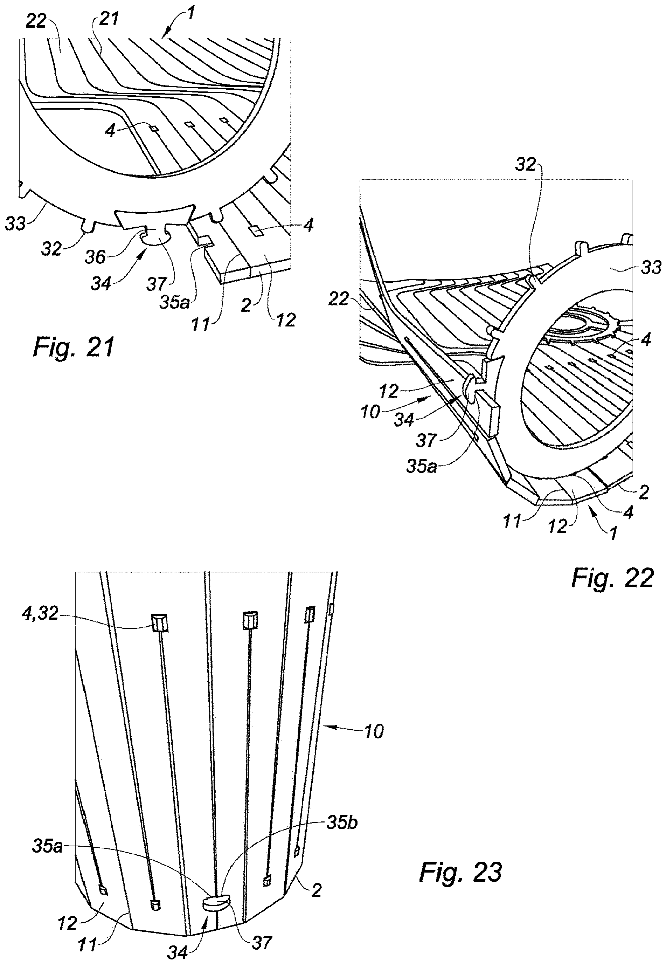

Les figures 21 à 23 illustrent des étapes de réalisation de l'objet tridimensionnel 100 mettant en oeuvre un accessoire de montage 33 selon un autre mode de réalisation.

Plus particulièrement, l'accessoire de montage 33 comprend, outre les ergots 32 venant s'encastrer dans les évidements d'encastrement 4 prévus dans la zone de déformation, au moins un crochet 34 permettant d'assurer le maintien de l'ébauche 1 en position déformée dans laquelle elle forme le corps 101. Le crochet 34 est configuré pour s'emboîter dans une échancrure 35a ménagée sur un premier côté de la zone de déformation 10, au début de la déformation de l'ébauche 1 (figure 21), et dans une échancrure 35b ménagée sur le côté opposé de la zone de déformation 10, en fin de déformation de l'ébauche 1 (figure 23). Les échancrures 35a, 35b peuvent être formées par les évidements d'encastrement 4 qui sont situés sur les côtés de l'ébauche 1. Le crochet 34 peut présenter une forme de T, avec un téton 36 radial et une tête 37, une languette 12 venant s'insérer entre la tête 37 et la partie annulaire principale de l'accessoire de montage 33, comme cela est bien visible sur la figure 22. Avec ce mode de réalisation, le dispositif d'emboitement décrit précédemment (pattes d'emboitement 13, 15 et encoches 14, 16) n'est pas nécessaire.

Le système de maintien décrit ci-dessus ne repose pas sur un ajustement serré ; il permet d'améliorer la fiabilité, et peut être utilisé sur d'autres outils de production.

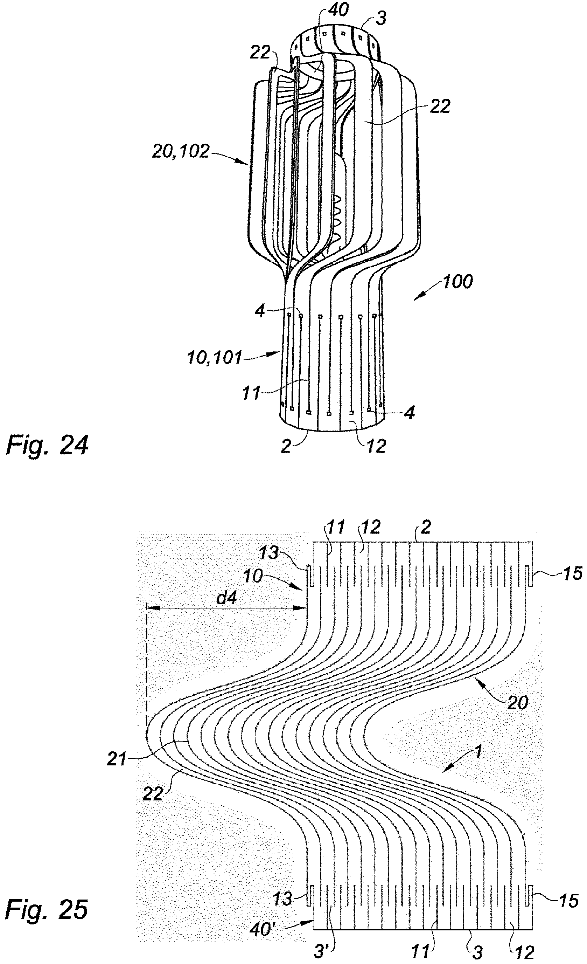

Dans le mode de réalisation illustré sur la figure 24, l'objet tridimensionnel 100 comprend un organe de fixation 40 de la partie extrême des pattes 22 opposée au corps 101. De façon concrète, comme illustré sur la figure 24, cet organe de fixation 40 peut se présenter sous la forme d'une pièce rapportée joignant ces parties extrêmes, comme par exemple un anneau, de préférence rigide, sur lequel sont fixées ces parties extrêmes. L'anneau peut être située à l'intérieur du volume v2 de façon à être moins visible.

On se rapporte maintenant à la figure 25, qui représente une ébauche 1 correspondant à la juxtaposition d'une ébauche conforme à celle de la figure 1 et d'une ébauche symétrique de celle de la figure 1. D'autres configurations doubles symétriques, à partir d'ébauches différentes de celle illustrée sur la figure 1, sont bien entendu possibles.

L'ébauche 1 de la figure 25 peut être vue comme s'étendant entre un bord transversal 2 et un bord transversal opposé 3, les découpes 21 borgnes de la deuxième pluralité formant des pattes 22 s'étendant depuis un deuxième bord 3' virtuel de l'ébauche 1 plane vers le premier bord 2, le deuxième bord 3' virtuel étant parallèle à et situé à distance du deuxième bord 3. De plus, outre les découpes borgnes 11 formant des languettes 12 qui s'étendent depuis le bord transversal 2, l'ébauche 1 comprend également des découpes borgnes 11 formant des languettes 12 qui s'étendent depuis le bord transversal 3.

L'ébauche 1 de la figure 25 peut être vue comme s'étendant entre un bord transversal 2 et un bord transversal opposé 3' virtuel, les découpes 21 borgnes de la deuxième pluralité débouchant sur ce bord transversal opposé 3' virtuel, l'ébauche 1 comportant en outre un organe de fixation 40' des parties extrêmes des pattes 22 opposées à la zone de déformation 10 jouxtant le bord transversal 2. L'organe de fixation 40' est alors formé d'une seule pièce avec l'ébauche 1, et non constitué d'une pièce rapportée, cet organe de fixation 40' étant formé par la bande de l'ébauche 1 qui est située entre le deuxième bord 3' virtuel et le deuxième bord 3.

## Revendications

1. Ébauche (1) plane d'objet tridimensionnel (100), réalisée sur un panneau de matériau (50), ladite ébauche (1) plane comprenant au moins :un premier bord (2) transversal, un deuxième bord (3) transversal, opposé au premier bord (2), au moins une zone de déformation (10) destinée à être déformée pour former un premier volume v1, ladite zone de déformation (10) comprenant une première pluralité de découpes (11) borgnes formant des languettes (12) s'étendant du premier bord (2) en direction du deuxième bord (3) sur une distance déterminée d1 strictement inférieure à la longueur totale L de l'ébauche (1), chaque découpe (11) borgne de la première pluralité s'étendant selon un axe globalement longitudinal de l'ébauche (1) plane, l'ébauche (1) comprend en outre une deuxième pluralité de découpes (21) borgnes formant des pattes (22) s'étendant depuis le deuxième bord (3) de l'ébauche (1) plane vers le premier bord (2) sur une distance déterminée d2 strictement inférieure à la longueur totale L de l'ébauche (1), la distance d3 entre chaque découpe (21) borgne de la deuxième pluralité et le premier bord (2) étant dépourvue de découpe de sorte que les languettes (12) et les pattes (22) sont reliées entre elles au niveau de la zone de déformation, les pattes (22) étant configurées pour, lorsque l'objet tridimensionnel (100) est réalisé, délimiter un deuxième volume v2 prolongeant le premier volume v1, et s'étendre depuis la zone de déformation tangentiellement au premier volume v1.

2. Ébauche selon la revendication 1, dans laquelle chaque découpe (11, 21) de chaque pluralité comprend une extrémité débouchant sur un bord (2, 3) et une extrémité opposée.

3. Ébauche selon l'une quelconque des revendications 1 ou 2, dans laquelle chaque découpe (21) de la deuxième pluralité est agencée entre deux découpes (11) de la première pluralité de sorte qu'une portion de chaque découpe (21) de la deuxième pluralité est en regard dans une direction transversale de l'ébauche (1) d'une portion de chaque découpe (11) borgne de la première pluralité.

4. Ébauche selon la revendication 2, dans laquelle l'extrémité opposée de chaque découpe (11) de la première pluralité et l'extrémité opposée de chaque découpe (21) de la deuxième pluralité, sont alignées dans une direction transversale, les découpes (11, 21) de la première pluralité et de la deuxième pluralité étant décalées dans la direction longitudinale de l'ébauche (1).

5. Ébauche selon l'une quelconque des revendications 1 à 4, dans laquelle les découpes (11) de la première pluralité peuvent être des fentes, des évidements ou des fentes et des évidements.

6. Ébauche selon l'une quelconque des revendications 1 à 5, dans laquelle les découpes (11) de la première pluralité peuvent être continues ou discontinues.

7. Ébauche selon l'une quelconque des revendications 1 à 6, comprenant un dispositif d'emboitement agencé au niveau de la zone de déformation (10) comprenant au moins une première patte d'emboitement (13) configurée pour s'emboîter dans une première encoche (14), la première patte d'emboîtement (13) étant agencée sur un premier côté de la zone de déformation (10) tandis que la première encoche (14) étant agencée sur le côté opposé de la zone de déformation (10).

8. Objet tridimensionnel (100), par exemple un luminaire, réalisé à partir de l'ébauche (1) selon l'une quelconque des revendications 1 à 7, ledit objet (100) étant **caractérisé en ce qu'**en ce qu'il comprend : un corps (101) formé par la déformation de la zone de déformation (10) de l'ébauche (1) selon l'une quelconque des revendications 1 à 7, le corps (101) délimitant un premier volume v1, au moins une extension (102) formée d'une pluralité de pattes (22) délimitant un deuxième volume v2 prolongeant le premier volume v1, la pluralité de pattes (22) s'étendant depuis la zone de déformation (10) tangentiellement audit corps (101).

9. Objet tridimensionnel selon la revendication 8, dans lequel les pattes (22) sont indépendantes les unes aux autres et ne sont rattachées au corps (101) qu'au niveau de la zone de déformation (10).

10. Objet tridimensionnel selon l'une quelconque des revendications 8 ou 9, comprenant au moins un accessoire de montage (30, 31, 33) comprenant au moins un ergot (32) saillant configuré pour coopérer avec un évidement d'encastrement (4) ménagé sur la zone de déformation (10) du corps (101).

11. Objet tridimensionnel selon la revendication 10, **caractérisé en ce que** l'accessoire de montage (33) comprend au moins un crochet (34) configuré pour s'emboîter dans une échancrure (35a) ménagée sur un premier côté de la zone de déformation (10) et dans une échancrure (35b) ménagée sur le côté opposé de la zone de déformation (10), afin d'assurer le maintien de l'ébauche (1) en position déformée dans laquelle elle forme le corps (101).

12. Objet tridimensionnel selon l'une quelconque des revendications 8 à 11, **caractérisé en ce qu'**il comprend un organe de fixation (40) de la partie extrême des pattes (22) opposée au corps (101).

## Patentansprüche

1. Flacher Rohling (1) eines dreidimensionalen Gegenstandes (100), der auf einer Werkstoffplatte (50) realisiert wird, wobei der flache Rohling (1) mindestens Folgendes umfasst: einen ersten querlaufenden Rand (2), einen zweiten querlaufenden Rand (3), gegenüber dem ersten Rand (2), mindestens einen Verformungsbereich (10), der dazu bestimmt ist, verformt zu werden, um ein erstes Volumen v1 zu bilden, wobei der Verformungsbereich (10) eine erste Vielzahl von einseitig offenen Ausschnitten (11) umfasst, die Zungen (12) bilden, die sich vom ersten Rand (2) in Richtung des zweiten Randes (3) über eine bestimmte Distanz d1 streng kleiner als die Gesamtlänge L des Rohlings (1) erstrecken, wobei sich jeder einseitig offene Ausschnitt (11) der ersten Vielzahl entlang einer im Allgemeinen längsverlaufenden Achse des flachen Rohlings (1) erstreckt, der Rohling (1) weiter eine zweite Vielzahl von einseitig offenen Ausschnitten (21) umfasst, die Laschen (22) bilden, die sich vom zweiten Rand (3) des flachen Rohlings (1) zum ersten Rand (2) über eine bestimmte Distanz d2 streng kleiner als die Gesamtlänge L des Rohlings (1) erstrecken, wobei die Distanz d3 zwischen jedem einseitig offenen Ausschnitt (21) der zweiten Vielzahl und dem ersten Rand (2) mit keinem Ausschnitt versehen ist, sodass die die Zungen (12) und die Laschen (22) auf Höhe des Verformungsbereichs miteinander verbunden sind, wobei die Laschen (22) konfiguriert sind, um, wenn der dreidimensionale Gegenstand (100) realisiert wird, ein zweites Volumen v2 zu begrenzen, das das erste Volumen v1 verlängert, und sich aus dem Verformungsbereich tangential zum ersten Volumen v1 zu erstrecken.

2. Rohling nach Anspruch 1, wobei jeder Ausschnitt (11, 21) einer jeden Vielzahl ein Ende, das in einen Rand (2, 3) mündet, und ein gegenüberliegendes Ende umfasst.

3. Rohling nach einem der Ansprüche 1 oder 2, wobei jeder Ausschnitt (21) der zweiten Vielzahl zwischen zwei Ausschnitten (11) der ersten Vielzahl derart angeordnet ist, dass ein Abschnitt eines jeden Ausschnitts (21) der zweiten Vielzahl in einer Querrichtung des Rohlings (1) gegenüber einem Abschnitt eines jeden einseitig offenen Ausschnitts (11) der ersten Vielzahl ist.

4. Rohling nach Anspruch 2, wobei das gegenüberliegende Ende eines jeden Ausschnitts (11) der ersten Vielzahl und das gegenüberliegende Ende eines jeden Ausschnitts (21) der zweiten Vielzahl in einer Querrichtung ausgerichtet sind, wobei die Ausschnitte (11, 21) der ersten Vielzahl und der zweiten Vielzahl in der Längsrichtung des Rohlings (1) versetzt sind.

5. Rohling nach einem der Ansprüche 1 bis 4, wobei die Ausschnitte (11) der ersten Vielzahl Schlitze, Aussparungen oder Schlitze und Aussparungen sein können.

6. Rohling nach einem der Ansprüche 1 bis 5, wobei die Ausschnitte (1) der ersten Vielzahl kontinuierlich oder diskontinuierlich sein können.

7. Rohling nach einem der Ansprüche 1 bis 6, eine Einsteckvorrichtung umfassend, die auf Höhe des Verformungsbereichs (10) angeordnet ist, die mindestens eine erste Einstecklasche (13) umfasst, die konfiguriert ist, um in eine Aussparung (14) eingesteckt zu werden, wobei die erste Einstecklasche (13) auf einer ersten Seite des Verformungsbereichs (10) angeordnet ist, während die erste Aussparung (14) auf der gegenüberliegenden Seite des Verformungsbereichs (10) angeordnet ist.

8. Dreidimensionaler Gegenstand (100), beispielsweise eine Leuchte, die aus dem Rohling (1) nach einem der Ansprüche 1 bis 7 realisiert wird, wobei der Gegenstand (100) **dadurch gekennzeichnet ist, dass** er Folgendes umfasst:
einen Körper (101), der durch das Verformen des Verformungsbereichs (10) des Rohlings (1) nach einem der Ansprüche 1 bis 7 gebildet wird, wobei der Körper (101) ein erstes Volumen v1 begrenzt, mindestens eine Erweiterung (102), die durch eine Vielzahl von Laschen (22) gebildet wird, die ein zweites Volumen v2 begrenzen, das das erste Volumen v1 verlängert, wobei sich die Vielzahl von Laschen (22) aus dem Verformungsbereich (10) tangential zum Körper (101) erstrecken.

9. Dreidimensionaler Gegenstand nach Anspruch 8, wobei die Laschen (22) voneinander unabhängig sind, und nur auf Höhe des Verformungsbereichs (10) am Körper (101) angebunden sind.

10. Dreidimensionaler Gegenstand nach einem der Ansprüche 8 oder 9, der mindestens ein Montagezubehör (30, 31, 33) umfasst, das mindestens eine hervorstehende Klaue (32) umfasst, die konfiguriert ist, um mit einer Einsteckaussparung (4) zusammenzuwirken, die in den Verformungsbereich (10) des Körpers (101) eingearbeitet ist.

11. Dreidimensionaler Gegenstand nach Anspruch 10, **dadurch gekennzeichnet, dass** das Montagezubehör (33) mindestens einen Haken (34) umfasst, der konfiguriert ist, um in einen Einschnitt (35a) eingesteckt zu werden, der auf einer ersten Seite des Verformungsbereichs (10) eingearbeitet ist, und in einen Einschnitt (35b) der auf der gegenüberliegenden Seite des Verformungsbereichs (10) eingearbeitet ist, um für den Halt des Rohlings (1) in der verformten Position, in der er den Körper (101) bildet, zu sorgen.

12. Dreidimensionaler Gegenstand nach einem der Ansprüche 8 bis 11, **dadurch gekennzeichnet, dass** er ein Befestigungsorgan (40) des dem Körper (101) gegenüberlegenden Abschlussteils der Laschen (22) umfasst.

## Claims

1. A flat preform (1) of a three-dimensional object (100), made on a panel of material (50), said flat preform (1) comprising at least: one first transverse edge (2), one second transverse edge (3), opposite the first edge (2), at least one deformation zone (10) intended to be deformed to form a first volume v1, said deformation zone (10) comprising a first plurality of blind cutouts (11) forming tongues (12) extending from the first edge (2) towards the second edge (3) over a determined distance d1 strictly less than the total length L of the preform (1), each blind cutout (11) of the first plurality extending along a generally longitudinal axis of the planar preform (1), the preform (1) further comprises a second plurality of blind cutouts (21) forming tabs (22) extending from the second edge (3) of the flat preform (1) towards the first edge (2) over a determined distance d2 strictly less than the total length L of the preform (1), the distance d3 between each blind cutout (21) of the second plurality and the first edge (2) having no cutout so that the tongues (12) and the tabs (22) are interconnected at the deformation zone, the tabs (22) being configured to, when the three-dimensional object (100) is produced, delimit a second volume v2 prolonging the first volume v1, and extend from the deformation zone tangentially to the first volume v1.

2. The preform according to claim 1, wherein each cutout (11, 21) of each plurality comprises an end opening onto an edge (2, 3) and an opposite end.

3. The preform according to any one of claims 1 or 2, wherein each cutout (21) of the second plurality is arranged between two cutouts (11) of the first plurality so that a portion of each cutout (21) of the second plurality faces a portion of each blind cutout (11) of the first plurality, in a transverse direction of the preform (1).

4. The preform according to claim 2, wherein the opposite end of each cutout (11) of the first plurality and the opposite end of each cutout (21) of the second plurality are aligned in a transverse direction, the cutouts (11, 21) of the first plurality and the second plurality being offset in the longitudinal direction of the preform (1).

5. The preform according to any one of claims 1 to 4, wherein the cutouts (11) of the first plurality can be slots, recesses or slots and recesses.

6. The preform according to any one of claims 1 to 5, wherein the cutouts (11) of the first plurality may be continuous or discontinuous.

7. The preform according to any one of claims 1 to 6, comprising an interlocking device arranged at the deformation zone (10) comprising at least a first interlocking projection (13) configured to be interlocked in a first notch (14), the first interlocking projection (13) being arranged on a first side of the deformation zone (10) while the first notch (14) being arranged on the opposite side of the deformation zone (10).

8. A three-dimensional object (100), for example a light fixture, made from the preform (1) according to any one of claims 1 to 7, said object (100) being **characterized in that** it comprises: a body (101) formed by the deformation of the deformation zone (10) of the preform (1) according to any one of claims 1 to 7, the body (101) delimiting a first volume v1, at least one extension (102) formed of a plurality of tabs (22) delimiting a second volume v2 prolonging the first volume v1, the plurality of tabs (22) extending from the deformation zone (10) tangentially to said body (101).

9. The three-dimensional object according to claim 8, wherein the tabs (22) are independent of each other and are attached to the body (101) only at the deformation zone (10).

10. The three-dimensional object according to any one of claims 8 or 9, comprising at least one mounting accessory (30, 31, 33) comprising at least one projecting lug (32) configured to cooperate with an embedding recess (4) provided on the deformation zone (10) of the body (101).

11. The three-dimensional object according to claim 10, **characterized in that** the mounting accessory (33) comprises at least one hook (34) configured to fit into an indentation (35a) provided on a first side of the deformation zone (10) and in an indentation (35b) provided on the opposite side of the deformation zone (10), in order to ensure that the preform (1) is held in the deformed position in which it forms the body (101).

12. The three-dimensional object according to any one of claims 8 to 11, **characterized in that** it comprises a member (40) for fixing the end part of the tabs (22) opposite the body (101).
